# EUROPEAN PATENT APPLICATION

(11) **EP 1 956 833 A1**
(43) Date of publication of application: **13.08.2008**
(21) Application number: 07105432.4
(22) Date of filing: 02.04.2007
(51) Int. Cl.: H04N 5/33, H04N 5/225

(54) **Infrared camera**

(30) Priority: 07.02.2007 CN 200720002182 U
(71) Applicant: Guangzhou SAT Infrared Technology Co., Ltd., Guangzhou Economic & Technol. Development District Guangzhou Guangdong 510730 (CN)
(72) Inventor: Wu, Jiping 10 Dongjiang Avenue,, Guangzhou, Guangdong 510730 (CN)
(74) Representative: Hudy, Ludwik

(57) **Abstract**

An infrared camera is provided with an infrared detection device having an infrared optical lens with a center line, an infrared detector, and a shutter, and being enclosed by an enclosure (7) having a front portion and a rear portion. The infrared camera is also provided with a multifunctional base (20) having a top and a bottom. A first connection member (11) is disposed on the rear portion of the enclosure (7). The first connection member (11) is engageable with a second connection member (12) disposed on the top of the multifunctional base (20). The bottom of the multifunctional base (20) is formed as a plane (25), which is able to form a connection with a support surface. The infrared detection device is capable to be connected to the multifunctional base (20) by engagement of the first connection member (11) with the second connection member (12). Furthermore, the infrared detection device is capable of being placed horizontally with the assistance of the plane (25) of the multifunctional base (20). The infrared camera can be operated with one hand and can be placed independently without the assistance of a tripod.

## Description

This invention relates to the fields of infrared technology, and specifically, to a handheld infrared camera.

Infrared thermal imaging is being widely used to detect infrared radiation having a spectral range of 0.75 µm - 1000 µm. Based on the spectral range, the infrared radiation is classified into three types: short, middle, and long wave. The capability of an object to emit infrared radiation varies with its temperature. Therefore, an infrared camera can be used to realize different detection purposes, such as security protection and monitoring, product inspection, temperature measurement, and other related applications.

The outer form of conventional portable infrared cameras resembles that of visible light cameras, video cameras, binocular telescopes, or gun thermometers.

From the US patent application publication No. 20060268116 A1 "Universal security camera" is known a camera, which has a compact housing which, in combination with the adjustable directionality of the turret that holds a lens assembly which can be aimed in various directions, enables universal mounting to various structures and positions in an aircraft cabin. The camera operates in light and dark conditions, as the lens assembly is configured to focus visible and infrared light wavelengths onto a fixed focal plane. In an embodiment, the camera includes an infrared illumination source to illuminate a field of view during dark conditions.

From the US patent application publication No. 20060289768 A1 "Portable infrared camera" which has a housing movably carried by an operator and a moveable infrared detector unit attached to the housing.

Thus, conventional portable infrared cameras are inconvenient for many applications as they must be either operated with both hands or require the use of a tripod to be kept steady in the operating position. Accordingly much opportunity remains for improvement in the area of infrared camera design.

It is one objective of the invention to provide a stand-alone infrared camera capable of being used conveniently and kept upright independently.

In one embodiment of the invention is provided an infrared camera comprising an infrared detection device having an infrared optical lens with a center line, an infrared detector, and a shutter, and being enclosed by an enclosure having a front portion and a rear portion, and a multifunctional base having a top and a bottom.

In certain embodiments of the invention, a first connection member is disposed on the rear portion of the enclosure whereas a second connection member is disposed on the top of the multifunctional base and the first connection member is engageable with the connection member.

In certain embodiments of the invention, the bottom of the multifunctional base is formed as a plane, which is able to form a connection with a support surface.

In certain embodiments of the invention, the infrared detection device being capable of being connected to the multifunctional base by engagement of first the connection member with the second connection member.

In certain embodiments of the invention, the infrared detection device is capable of being placed horizontally with the assistance of the plane of the multifunctional base.

In certain embodiments of the invention, a first slope and a second slope intersecting with one another at an angle are formed on the top of the multifunctional base.

In certain embodiments of the invention, the second connection member is set on the second slope.

In certain embodiments of the invention, the enclosure of the infrared detection device is disposed on the first slope.

In certain embodiments of the invention, the first connection member on the enclosure is connected to the second connection member on the second slope.

In certain embodiments of the invention, the first connection member on the enclosure is a groove and the second connection member on the multifunctional base is a strip capable of being engaged with the groove.

In certain embodiments of the invention, a battery cover that can be opened and closed is further disposed on the rear portion of the enclosure, and a battery for powering the infrared detection device is placed under the battery cover.

In certain embodiments of the invention, a charging port for charging the battery of the infrared detection device is disposed on the multifunctional base.

In certain embodiments of the invention, the first connection member on the rear portion of the enclosure is located on the battery cover.

In certain embodiments of the invention, a USB interface and/or an audio interface is set on the multifunctional base.

In certain embodiments of the invention, the infrared optical lens of the infrared detection device is located at the front portion of the enclosure.

In certain embodiments of the invention, when the shutter of the infrared detection device is in an opened state, the infrared optical lens is oriented so as to channel the absorbed infrared radiation onto the infrared detector of the infrared detection device via the shutter.

In certain embodiments of the invention, the center line of the infrared optical lens and a side of the enclosure form a first angle.

In certain embodiments of the invention, the first slope and the plane of the multifunctional base form a second angle.

In certain embodiments of the invention, the first angle is equal to the second angle.

In certain embodiments of the invention, the infrared detection device further comprises one or more photoelectric components of a visible light video camera, a laser head, and an illuminator located on the upper portion of the enclosure.

In certain embodiments of the invention, the infrared optical lens is disposed in the front portion of the enclosure and is oriented so as to guide the absorbed infrared radiation onto the infrared detector of the infrared detection device via the shutter of the infrared detection device when the shutter is in an open state.

In certain embodiments of the invention, the photoelectric components are located above the infrared optical lens.

In certain embodiments of the invention, a switch for controlling the infrared optical lens and the photoelectrical components is disposed on the enclosure and is located below the infrared optical lens.

In certain embodiments of the invention, the infrared detection device further comprises a monitor, and the monitor is connected to the enclosure by means of a rotating shaft on a side of the enclosure.

In certain embodiments of the invention, a handle is further disposed on the enclosure of the infrared detection device.

In certain embodiments of the invention, the handle comprises a groove fluted on a side of the enclosure.

In certain embodiments of the invention, the infrared detection device comprises further an operation panel, the operation panel 8 being disposed on the top of the enclosure and in front of the handle.

In certain embodiments of the invention, one or more holes for attaching the multifunctional base to a tripod are further formed on the bottom of the multifunctional base.

Many of the attendant advantages of the present invention will become more readily apparent and better understood as the following detailed description is considered in connection with the accompanying drawings in which:
Fig. 1 is a front elevational view of an infrared camera in a multifunctional base in accordance with one embodiment of the invention;
Fig. 2 is a rear portion elevational view thereof;
Fig. 3 is a right side elevational view thereof;
Fig. 4 is front right perspective view thereof;
Fig. 5 is a right back perspective view thereof;
Fig. 6 is a right back perspective view thereof;
Fig.7 is a right back perspective view of a multifunctional base for an infrared camera in accordance with one embodiment of the invention;
Fig. 8 is a right back perspective view of an infrared camera showing a monitor in an unfolded status in accordance with one embodiment of the invention;
Fig. 9 is a right bottom perspective view of an infrared camera in accordance with one embodiment of the invention;
Fig. 10 is a left elevational view of an infrared camera in accordance with one embodiment of the invention; and
Fig. 11 is a circuit diagram of the infrared detection device of an infrared camera in accordance with one embodiment of the invention.

The infrared camera in accordance with the invention comprises an infrared detection device and a multifunctional base. The infrared detection device performs infrared imaging and other related purposes; for example, it can comprise an infrared detector, an infrared optical lens, an operation panel, a monitor, and so on. An enclosure is set to enclose the infrared detection device. The multifunctional base is a separate base on which the infrared camera can be positioned upright.

The infrared camera in accordance with the invention will be described further hereinafter with references to the related drawings and specific embodiments.

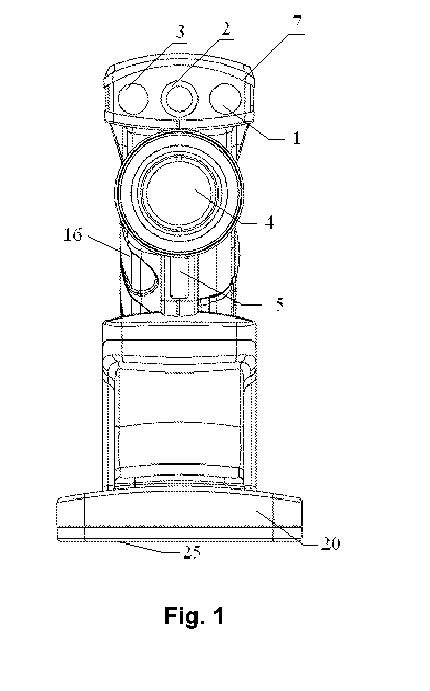

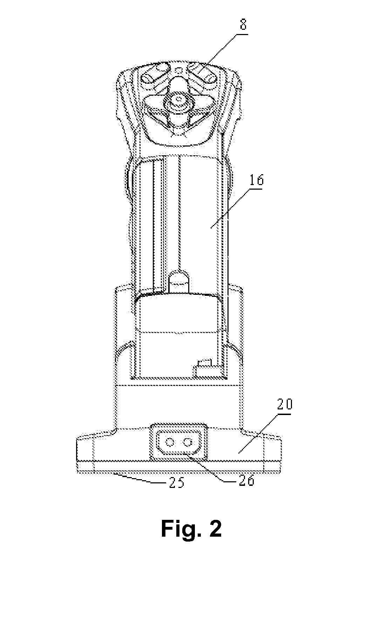

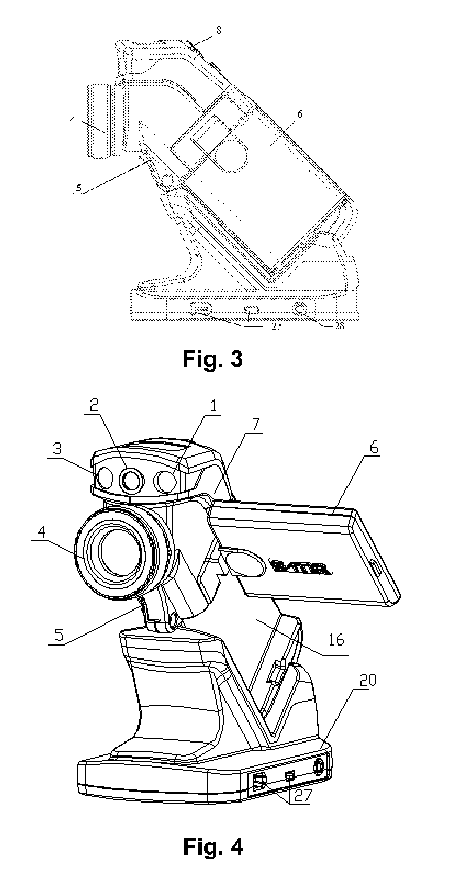

Figs. 1-10 illustrate an infrared camera in accordance with the embodiments of the invention. As shown in Figs. 1-5, the infrared camera comprises an infrared optical lens 4, a switch 5, a monitor 6, an enclosure 7, an operation panel 8, a handle 16, and a multifunctional base 20. With reference to Fig. 1, the infrared camera further comprises a visible light video camera 1, a laser head 2, and an illuminator 3. It is comprehensible to those skilled in the art that the infrared camera of the invention can comprise all or a part of the above-mentioned components. For example, it comprises only the infrared optical lens 4, the enclosure 7, and the operation panel 8. Other components can also be added as required. For example, a handle 16 can be added on the infrared camera for easy carrying and grasping with one hand. Moreover, some of these components can be extended or combined as required, and can be replaced as required.

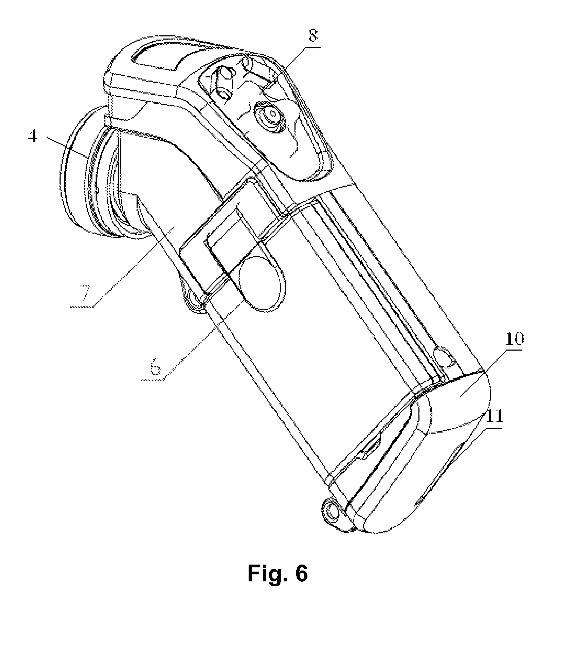

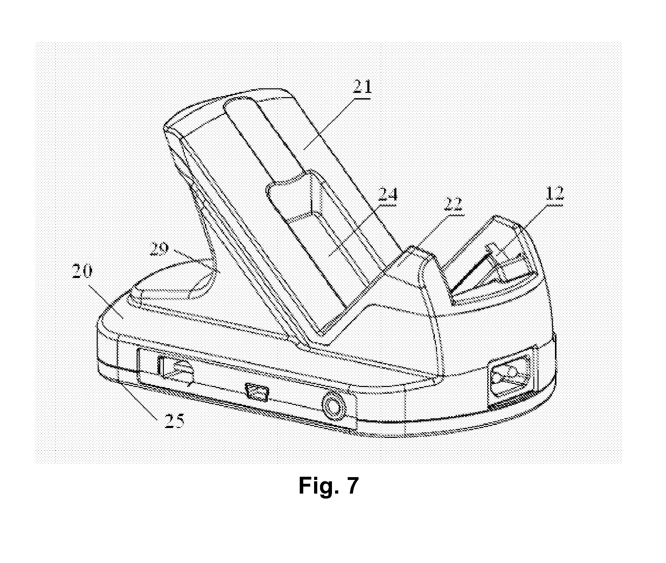

As shown in Fig. 6, the infrared detection device of the invention comprises the enclosure 7 with a first connection member 11 disposed on its rear portion. As shown in Fig. 7, a second connection member 12 serving to for a connection with the infrared detection device is disposed on top of multifunctional base 20. The multifunctional base 20 further comprises a plane 25 serving to place the multifunctional base on a supporting surface. This is to say that by engaging the first connection member 11 of the enclosure 7 with the second connection member 12 of the multifunction base 20, the infrared detection device can be installed and fixed on the multifunctional base 20.

The engagement mode of the first connection member 11 of the enclosure 7 with the second connection member 12 of the multifunctional base 20 is optional as long as the infrared detection device can be installed and fixed stably on multifunctional base 20. As shown in Figs. 6-7, the first connection member 11 of the enclosure 7 is a groove; correspondingly, the second connection member 12 of the multifunctional base 20 is a strip. When attaching the infrared detection device to the multifunctional base 20, the strip is inserted and engaged with the groove so that the infrared detection device is fixed on the multifunctional base 20.

A battery is required to power the infrared detection device. The battery can be set at the rear portion of the enclosure 7, which can be opened or closed so that the battery can be easily inserted or removed. Specifically, as shown in Fig. 6, a battery cover 10 that can be opened or closed, is disposed on the rear portion of the enclosure 7, and the first connection member 11 can be formed on the battery cover 10, which is connected to the enclosure 7 by means of a hinge disposed on the lower rear portion of the enclosure 7.

A groove 24 is disposed on the corresponding position of the multifunctional base 20 so that the infrared detection device can be installed conveniently on the multifunctional base 20. Preferably, the groove 24 is set towards the front of the multifunctional base (towards the left in Fig. 7) with respect to the second connection member 12 so that the electrical (incl., optical, magnetic, etc.) connection of the infrared detection device with the multifunctional base 20 is not affected.

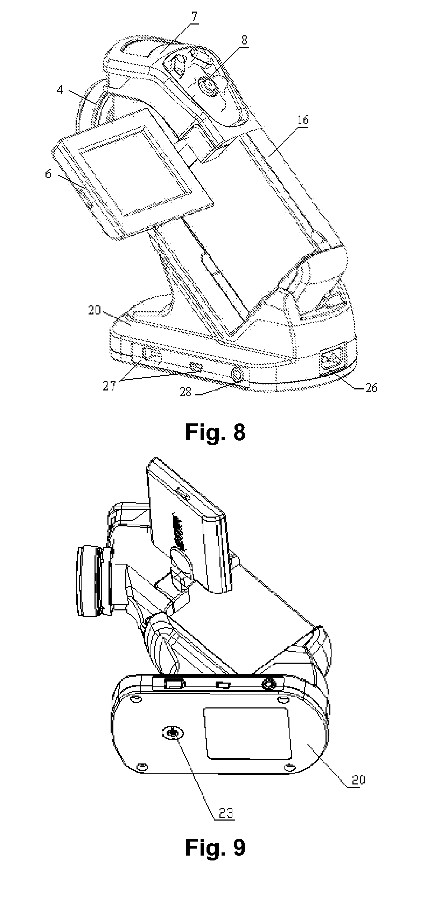

As shown in Fig. 8, a charging port 26 is further formed on the multifunctional base 20 and serves to charge the battery of the infrared detection device. Similarly, other interfaces such as a USB interface 27, an audio interface 28, and so on are also formed on the multifunctional base 20. When the infrared detection device is inserted into or connected to the multifunctional base 20, the interfaces on the multifunctional base 20 are ready for use.

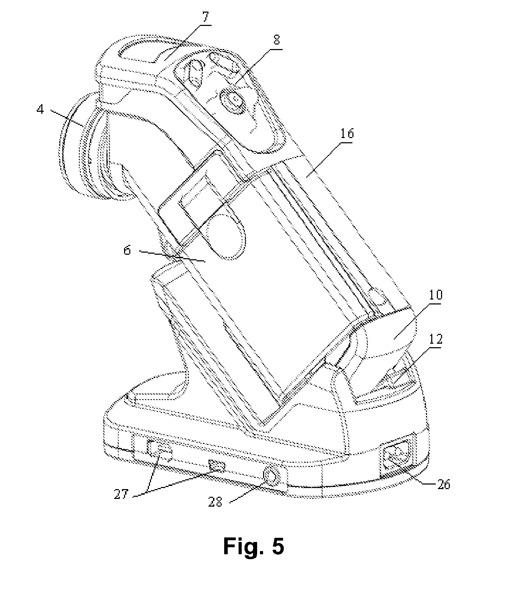

As shown in Fig. 5, the infrared detection device can be installed on the multifunctional base 20 at an angle between an edge of the infrared device and the plane 25 of less than 90° for easy operation. For example, it can be installed at an angle of 45°. When installing the infrared detection device at an angle of less than 90°, a slope forming a corresponding angle with the plane 25 must be formed on top of the multifunctional base 20 to ensure the correct application and installation of the infrared detection device. For example, a first slope 21 and a second slope 22 are formed on top of the multifunctional base 20, with the second connection member 12 set on the second slope 22, as shown in Fig. 7. When installing the infrared detection device, the enclosure 7 can be disposed on the first slope 21, and the first connection member 11 of the enclosure 7 is engaged with the second connection member 12 of the second slope 22 so that the infrared detection device is fixed on the multifunctional base 20, as shown in Fig. 8.

Optionally, the infrared detection device can be installed horizontally on the multifunctional base 20, i.e., in a way so that an edge of the infrared detection device is parallel to the plane 25; or the infrared detection device can be installed vertically on the multifunctional base 20, i.e., in a way so that the same edge of the infrared detection device is normal to the plane 25.

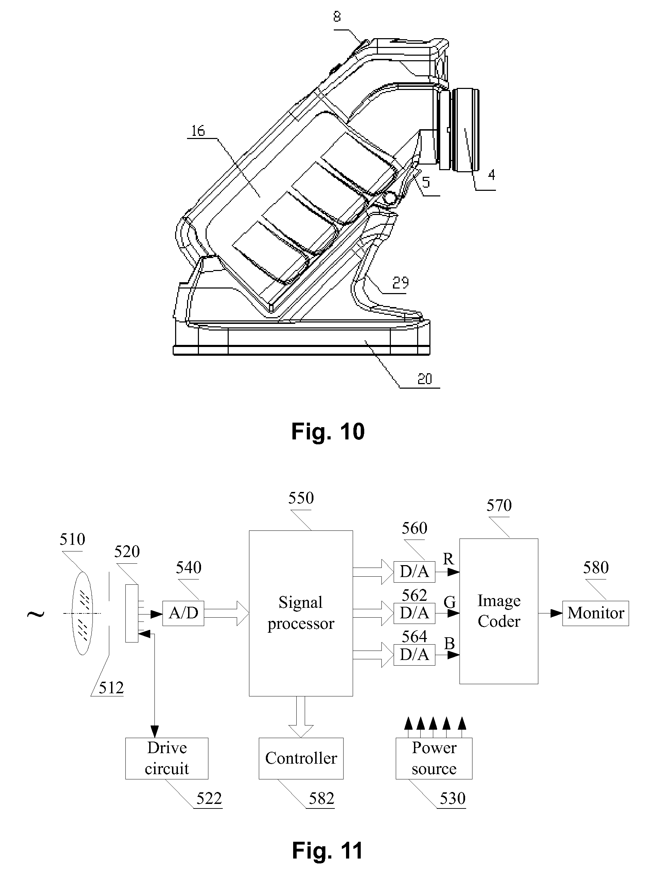

In these cases, the top of the multifunctional base can be formed as a plane rather than a broken plane at an angle between the first slope 21 and the second slope 22. In addition, a pit corresponding to the shape of the rear portion of the enclosure 7 can be formed on the multifunctional base 20 to ensure that the infrared detection device can be installed stably on the multifunctional base by engaging the second connection member 12 with the pit. As shown in Fig. 10, the outer surface of connection member 29 between the first slope 21 and the top of multifunctional base 20 can be formed as a concave surface.

As shown in Fig. 9, a plurality of holes 23 for fixing the triangular frame is further formed on the bottom of the multifunctional base 20 so that the infrared camera can be attached to a tripod in situations where a plane is not available.

In accordance with the invention, a handle 16 can be formed on the middle portion of the enclosure 7 for easy operation with one hand. Specifically, the enclosure 7 can be formed in the shape of slender rectangular parallelepiped having a cross section suitable for grasping with one hand. For example, the rectangular parallelepiped can be 80-120 mm wide and 40-65 mm high. As shown in Fig. 10, a concave groove in the shape of fingers can be formed further on the enclosure 7 for easy grasping by the user.

The operation panel 8 of the infrared detection device also can be set in front of the handle 16 so that the user can grasp the camera and operate the operation panel 8 with the same hand. It is obvious that handle 16 is not restricted to a certain shape as long as it can facilitate the user's operation with one hand.

Generally, the infrared detection device further comprises an infrared optical lens, a display apparatus, an enclosure, and an operation panel.

In accordance with one embodiment, the infrared optical lens is set in front of the enclosure 7 and can be assembled with one or more other infrared optical lens to form an optical lens system. When the shutter of the infrared detection device is opened, the infrared optical lens 4 guides the absorbed infrared radiation into the infrared detector of the infrared detection device via the shutter.

When the infrared detection device is installed on the multifunctional base 20 at an angle of less than 90°, the angle between the central line of the infrared optical lens 4 and the side surface of the enclosure 7 is preferably equal to that between the first slope 21 and the plane 25 of the multifunctional base 20, wherein the central line of the infrared optical lens 4 is parallel to the optical axis.

The operation panel 8 is set on the upper portion of the enclosure 7. The operation panel shown in Fig. 1 comprises two splayed buttons, and a button that can be pressed down separately. It is obvious to those skilled in the art that the operation panel 8 is not restricted to a certain shape as long as it facilitates easy and practical operation by the user.

In accordance with one embodiment of the invention, a switch 5 is disposed additionally on the infrared detection device so as to open and close the infrared optical lens 4. Preferably, a switch 5 is located below the infrared optical lens 4. In one class of this embodiment, the switch 5 is a multifunctional switch, which controls not only the optical lens but also other photoelectric components, such as, e.g., a shutter 512, an infrared detector 520, a drive circuit 522, a power source 530, an analog/digital converter 540, a signal processor 550, digital/analog converters 560, 562, 564, an image coder 570, a monitor 580, and a controller 582.

The infrared detection device can comprise further one or more photoelectric components of a visible light video camera 1, a laser head 2, and an illuminator 3, which are controlled by switch 5. These components can be disposed on the upper side of the enclosure 7, specifically above the infrared optical lens 4. The visible light video camera 1 captures static images or records video by means of detecting the radiation within the range of the visible light spectral, wherein said video can contain an audio signal.

The laser head 2 generates a visible laser beam to expose the object so that the object is located in the middle or near middle of the image captured by video camera 1. The illuminator 3 generates light to illuminate the object for easy recording by the visible light video camera. Corresponding, three openings must be disposed on the enclosure 7 to install the visible light video camera 1, the laser head 2, and the illuminator 3, respectively. The three openings can be set according to requirements. For example, the centers of the three openings can be in a direct line parallel to the plane 25 of the multifunctional base 20.

The display apparatus of the infrared detection device is generally a viewfinder or a monitor, but both of these devices can be simultaneously incorporated into the infrared camera for added functionality. In any event, the monitor 6 is attached to the enclosure 7 in such a way so that it can be stowed away while not in use so as to protect the display surface by turning it away from the surroundings and towards the surface of the enclosure. For example, when in the stowed-away position the display surface of the monitor is parallel to the surface of the enclosure.

However, when in use, the monitor is swiveled out so as to orient the display surface of the monitor to any viewing angle that is desired in order to allow for optimal viewing. This is accomplished, e.g., by connecting the monitor 6 to the enclosure 7 by a joint. The joint is a primitive joint, i.e., one that expresses one degree of freedom (or coordinate of motion), or a composite joint, i.e., a joint compounded from more than one joint primitive, and thus representing more than one degree of freedom. Accordingly, the monitor is adjustable around at least one or more axes of rotation.

Particularly, as exemplified in Figs. 5 and 9, the monitor 6 is connected at one of the monitor sides to enclosure 7 via a combination of two primitive joints. One of these joint allows the monitor to swivel with its unconnected side away from the enclosure so that the display surface of the monitor is rotated around a first axis of rotation from a position where the display surface of the monitor is oriented parallel to the surface of enclosure 7 (Fig. 5) to a position where the display surface of the monitor is no longer parallel to the surface of the enclosure 7. The second joint allows the monitor to be rotated around a second axis of rotation which is not parallel in space to the first axis, e.g., an axis that is normal or substantially normal to the surface of the enclosure 7. In certain embodiments, the first axis of rotation is perpendicular to the second axis of rotation.

In certain embodiments, the monitor is attached to the side of the enclosure 7 via a rotating shaft. The rotating shaft is disposed at the side of the enclosure parallel to the plane 25 of the multifunctional base 20, and allows for opening and closing the monitor. A second rotating shaft is further set to allow the monitor to be adjusted to different angles so as to better view an image. The second rotating shaft is connected to the first rotating shaft at a certain angle and is parallel to the plane 25 of the multifunctional base 20. The second rotating shaft is preferably placed vertically to the first rotating shaft. The monitor shown in Fig. 8 is opened to a certain angle and that shown in Fig. 5 is closed to the side of the enclosure 7 via the two rotating shafts. If the handle 16 set on the enclosure 7 has a concave groove, the monitor and the concave groove can be set on either side of the enclosure 7.

The screen of the monitor 6 displays the image captured by the infrared camera, which can be an infrared image taken by the infrared detection device or an image or video taken by the visible light video camera 1.

The monitor 6 is, without limitation, a flat panel display, such as, for example, a liquid crystal display (LCD), a plasma display panel (PDP), a ferroelectric liquid crystal display (FLCD), a twisted nematic LCD (TN-LCD), a super twisted nematic LCD (STN-LCD), a metal-insulator-metal LCD (MIM-LCD), a thin film transistor LCD (TFT-LCD), an active matrix liquid crystal display (AMLCD), a plastic LCD, an electroluminescent display (ELD), a field emission device (FED), or a light emitting diode (LED), or multiples thereof, or combinations thereof. The monitor 6 may be provided further with a touch screen interface that allows the user to select and alter displayed content using a pointer, such as, but not limited to, a stylus, a pen tip, a fingertip, or other pointing device. The operation and functions of the infrared camera may be controlled via the touch screen interface.

Fig. 11 is a circuit diagram of the infrared detection device of the infrared camera in accordance with a preferred embodiment of the invention, comprising: an infrared optical lens 510, a shutter 512, an infrared detector 520, a drive circuit 522, a power source 530, an analog/digital converter 540, a signal processor 550, digital/analog converters 560, 562, 564, an image coder 570, a monitor 580, and a controller 582. All these photoelectric components are enclosed by the enclosure 7. It is obvious to those skilled in the art that the components can be changed, selected, or modified as required.

When the shutter of the infrared detection device is opened, the infrared optical lens 4 guides the absorbed infrared radiation into the infrared detector of the infrared detection device via the shutter. Optionally, the infrared optical lens 510 can be the same as the infrared optical lens 4 shown in Fig. 1.

The infrared detector 520 is driven by the signal generated by the drive circuit 522 and generates a corresponding electrical signal based on the detected infrared radiation. The electrical signal is then converted to a digital signal via analog/digital converter 540, and the digital signal is sent to the signal processor 550 for processing. The signal processor 550 processes the received digital signal which can be the signal sent from the analog/digital converter 540 and/or the signal sent from the controller 582, which can be the audio input signal received by the microphone. The processed digital signal is then sent by the signal processor 550 to digital/analog converters 560, 562, and 564 for converting to an analog signal, and the analog signal is sent to the image coder 570. Depending on the analog signal received, the image coder 570 generates a corresponding display signal and sends it to a monitor 580, wherein the display signal can comprise audio signal. The signal generated by the image coder 570 also can be sent to peripheral apparatus such as a computer or television, or can be stored via the USB interface 27 on the multifunctional base 20 of the infrared thermal imager.

The infrared camera of the invention can further comprise additional components such as a microphone, a speaker, storage capacity, and so on. Optionally, any of this apparatus can be peripheral and can be connected to the infrared camera via the USB interface, or any other type of interface.

In addition to sending the audio input signal from the microphone to the signal processor 550, the controller 582 can also receive the digital signal sent from the signal processor 550 and generate a corresponding audio output signal according the digital signal. Then, the controller 582 can send the audio output signal to the speaker. Optionally, the controller 582 can also store the digital signal and/or audio signal.

The infrared detection device also comprises a power source 530 comprising a power circuit and a battery, which power source serves to power the various components.

This invention is not to be limited to the specific embodiments disclosed herein and modifications for various applications and other embodiments are intended to be included within the scope of the appended claims. While this invention has been described in connection with particular examples thereof, the true scope of the invention should not be so limited since other modifications will become apparent to the skilled practitioner upon a study of the drawings, specification, and following claims.

All publications and patent applications mentioned in this specification are indicative of the level of skill of those skilled in the art to which this invention pertains. All publications and patent applications mentioned in this specification are herein incorporated by reference to the same extent as if each individual publication or patent application mentioned in this specification was specifically and individually indicated to be incorporated by reference.

## Claims

1. An infrared camera comprising
an infrared detection device having an infrared optical lens with a center line, an infrared detector, and a shutter, and being enclosed by an enclosure (7) having a front portion and a rear portion; and
a multifunctional base (20) having a top and a bottom;
wherein
a first connection member (11) is disposed on said rear portion of said enclosure (7);
a second connection member (12) is disposed on said top of the multifunctional base (20);
said first connection member (11) is engageable with said second connection member (12);
said bottom of said multifunctional base (20) is formed as a plane (25), said plane (25) being able to form a connection with a support surface;
said infrared detection device being capable of being connected to said multifunctional base (20) by engagement of the first connection member (11) with the second connection member (12); and
said infrared detection device is capable of being placed horizontally with the assistance of the plane (25) of the multifunctional base (20).

2. The camera of claim 1, wherein
a first slope (21) and a second slope (22) intersecting with one another at an angle are formed on said top of said multifunctional base (20);
said second connection member (12) is set on the second slope (22);
said enclosure (7) of said infrared detection device is disposed on said first slope (21); and
said first connection member (11) on the enclosure (7) is connected to the second connection member (12) on said second slope (22).

3. The camera of claim 1, wherein said first connection member (11) on said enclosure (7) is a groove and said second connection member (12) on said multifunctional base (20) is a strip capable of being engaged with said groove.

4. The camera of claim 1, wherein a battery cover (10) that can be opened and closed is further disposed on said rear portion of said enclosure (7), and a battery for powering said infrared detection device is placed under said battery cover (10).

5. The camera of claim 1, wherein a charging port (26) for charging the battery of the infrared detection device is disposed on said multifunctional base (20).

6. The camera of claim 4, wherein the first connection member (11) on said rear portion of said enclosure (7) is located on said battery cover (10).

7. The camera of claim 1, wherein a USB interface (27) and/or an audio interface (28) is set on said multifunctional base (20).

8. The camera of claim 1, wherein
said infrared optical lens (4) of said infrared detection device is located at said front portion of said enclosure (7); and
when said shutter of said infrared detection device is in an opened state, said infrared optical lens (4) is oriented so as to channel the absorbed infrared radiation onto said infrared detector of the infrared detection device via said shutter.

9. The camera of claim 2, wherein
said center line of said infrared optical lens (4) and a side of said enclosure (7) form a first angle;
said first slope (21) and said plane (25) of the multifunctional base (20) form a second angle; and
said first angle is equal to said second angle.

10. The camera of claim 1, wherein said infrared detection device further comprises one or more photoelectric components of a visible light video camera (1), a laser head (2), and an illuminator (3) located on the upper portion of said enclosure (7).

11. The camera of claim 10, wherein
said infrared optical lens (4) is disposed in said front portion of said enclosure (7) and is oriented so as to guide the absorbed infrared radiation onto said infrared detector of said infrared detection device via said shutter of said infrared detection device when said shutter is in an open state;
said photoelectric components are located above said infrared optical lens (4); and
a switch (5) for controlling said infrared optical lens (4) and said photoelectrical components is disposed on said enclosure (7) and is located below said infrared optical lens (4).

12. The camera of claim 1, wherein said infrared detection device further comprises a monitor (6), and said monitor (6) is connected to said enclosure (7) by means of a rotating shaft on a side of said enclosure (7).

13. The camera of claim 1, wherein a handle (16) is further disposed on said enclosure (7) of said infrared detection device.

14. The camera of claim 13, wherein said handle (16) comprises a groove fluted on a side of said enclosure (7).

15. The camera of claim 14, wherein said infrared detection device comprises further an operation panel (8), said operation panel (8) being disposed on said top of said enclosure (7) and in front of said handle (16).

16. The camera of claim 1, wherein a plurality of holes (23) for attaching said multifunctional base (20) to a tripod are further formed on the bottom of said multifunctional base (20).

## Amended claims

### Amended claims in accordance with Rule 137(2) EPC.

**1.** An infrared camera comprising an infrared detection device and a multifunctional base (20), the infrared detection device having an infrared optical lens with a center line, an infrared detector, and a shutter, and being enclosed by an enclosure (7) having a front portion and a rear portion with a first connection member (11) disposed on the rear portion of the enclosure (7), and the multifunctional base (20) having a bottom formed as a plane (25) and a top with a second connection member (12) disposed on the top of the multifunctional base (20) and engageable with the first connection member (11) **characterised in that** the multifunctional base (20) at the top has a first slope (21) on which is disposed the enclosure (7) of the infrared detection device and which is intersecting at an angle with a second slope (22) on which is disposed the second connection member (12) connected to the first connection member (11) of the enclosure (7).

**2.** The camera according to claim 1, **characterized in that** the infrared detection device is installed on the multifunctional base (20) at an angle between an edge of the infrared detection device and the plane (25) of less than 90°.

**3.** The camera according to claim 1, **characterized in that** the first connection member (11) formed in the enclosure (7) is a groove and the second connection member (12) formed on the multifunctional base (20) is a strip capable of being engaged with the groove.

**4.** The camera according to claim 1, **characterized in that** a battery cover (10) capable to be opened and closed is further disposed on the rear portion of the enclosure (7), and a battery for powering the infrared detection device is placed under the battery cover (10).

**5.** The camera according to claim 1, **characterized in that** a charging port (26) for charging the battery of the infrared detection device is disposed on the multifunctional base (20).

**6.** The camera according to claim 4, **characterized in that** the first connection member (11) on the rear portion of the enclosure (7) is located on the battery cover (10).

**7.** The camera according to claim 1, **characterized in that** a USB interface (27) and/or an audio interface (28) is set on the multifunctional base (20).

**8.** The camera according to claim 4, **characterized in that** the infrared optical lens (4) of the infrared detection device is located at the front portion of the enclosure (7) and when the shutter of the infrared detection device is in an opened state, the infrared optical lens (4) is oriented so as to channel the absorbed infrared radiation onto the infrared detector of the infrared detection device via the shutter.

**9.** The camera according to claim 1, **characterized in that** the center line of the infrared optical lens (4) and a side of the enclosure (7) form a first angle whereas the first slope (21) and the plane (25) of the multifunctional base (20) form a second angle and the first angle is equal to the second angle.

**10.** The camera according to claim 1, **characterized in that** the infrared detection device further comprises one or more photoelectric components of a visible light video camera (1), a laser head (2), and an illuminator (3) located on the upper portion of the enclosure (7).

**11.** The camera according to claim 10, **characterized in that** the infrared optical lens (4) is disposed in the front portion of the enclosure (7) and is oriented so as to guide the absorbed infrared radiation onto the infrared detector of the infrared detection device via the shutter of the infrared detection device when the shutter is in an open state, and the photoelectric components are located above the infrared optical lens (4) and a switch (5) for controlling the infrared optical lens (4) and the photoelectrical components is disposed on the enclosure (7) below the infrared optical lens (4).

**12.** The camera according to claim 1, **characterized in that** the infrared detection device further comprises a monitor (6) connected to the enclosure (7) by means of a rotating shaft on a side of the enclosure (7).

**13.** The camera according to claim 1, **characterized in that** a handle (16) is further disposed on the enclosure (7) of the infrared detection device.

**14.** The camera according to claim 13, **characterized in that** the handle (16) comprises a groove fluted on a side of the enclosure (7).

**15.** The camera according to claim 14, **characterized in that** the infrared detection device comprises further an operation panel (8) disposed on the top of the enclosure (7) and in front of the handle (16).

**16.** The camera according to claim 1, **characterized in that** a plurality of holes (23) for attaching the multifunctional base (20) to a tripod are further formed on the bottom of the multifunctional base (20).
